# EUROPEAN PATENT APPLICATION

(11) **EP 4 427 905 A1**
(43) Date of publication of application: **11.09.2024**
(21) Application number: 23305309.9
(22) Date of filing: 08.03.2023
(51) Int. Cl.: B29C 43/24, B29C 43/32, H01G 11/28, H01G 11/50, H01G 11/70, H01G 11/86, H01M 4/04, H01M 4/139, H01M 4/62, H01M 4/66, H01M 4/1391

(54) **MANUFACTURE OF DRY ELECTRODES FOR BATTERIES USING A SOLVENT FREE PASTE**

(71) Applicant: Automotive Cells Company SE, 33520 Bruges (FR)
(72) Inventor: BEN-ALI, Imed Eddine, 33100 BORDEAUX (FR); DEVANNE, Thomas, 33520 BRUGES (FR)
(74) Representative: Alatis

(57) **Abstract**

A method for manufacturing a dry electrode for batteries, directly from an agglomerate of a dry paste of a fibrilized mixture of electrode materials comprising at least one electrode active material, optionally at least one conductive material, at least one binder and optionally at least one co-binder, by continuously calendering said agglomerates and then laminating the formed calendered film.

## Description

### TECHNICAL FIELD OF THE INVENTION

The present invention relates to the manufacture of dry electrodes for batteries. More particularly it relates to a pasty dry mixture of components to be used in the manufacturing of lithium-ion batteries with gelled or liquid electrolyte or solid-state batteries.

### TECHNICAL BACKGROUND OF THE INVENTION

European patent application publication EP 3 625 018 A1 discloses a method for producing a dry film, wherein a dry powder mixture of active material is processed into a dry film by a rolling device having a first roll and a second roll, wherein the first roll has a higher rotational peripheral speed than the second roll, and the dry film is stored on the first roll.

European patent application publication EP 3 965 181 A1 discloses a dry electrode manufacture using a lubricating active material mixture comprising an electrode active material, a binder, an additive solution made of a mixture of a polymer additive, and a liquid carrier.

International publication WO 2020/148410 A1 discloses a system for manufacturing a dry electrode for an energy storage device, comprising: a first dry electrode material delivery system configured to deliver a dry electrode material, a first calendering roll, a second calendering roll configured to form a first nip between the first calendering roll and the second calendering roll, the first nip configured to receive the dry electrode material from the first dry electrode material delivery system, and form a dry electrode film from the dry electrode material; and a controller, configured to control the rotational speed of the second calendering roll to be greater than the rotational speed of the first calendering roll.

International application WO 2021/028619 A1 discloses a process for manufacturing a dry film for an article used in an electrochemical device, such an electrochemical cell, from a paste comprising between 0.1% by mass and 85% by mass of background fluid. Examples 4 and 5 of said international application discloses isopropanol or a mixture of water and isopropanol as a background fluid which is used in the process.

These existing solutions, however, lead to the use of a highly powdery environment for feeding and calendering the powder. The presence of even a small amount of solvent is detrimental to the viability of the paste during the manufacture of the film and to the resulting homogeneity of this film. Therefore, a solution capable of eliminating said harmful powdery environment, in the cheapest and safest way, would be beneficial.

### DESCRIPTION OF THE INVENTION

According to a first embodiment, the invention therefore relates to a method for manufacturing a dry electrode for batteries, said method comprising the following steps:
- A step 1) providing solvent free agglomerates of a dry paste of a fibrilized mixture of electrode materials, said mixture of electrode materials comprising at least one active electrode material, optionally at least one conductive material, at least one binder, and optionally at least one co-binder, said agglomerates having a size in the range of 10 micrometres (µm) to 2 centimetres (cm), and said solvent free agglomerates of the dry paste of the fibrilized mixture of electrode materials having a temperature between 50°C and 100°C;
- A step 2) of continuously calendering, at a temperature ranging between 80°C and 120°C, said agglomerates of the dry paste of the fibrilized mixture of electrode materials provided at step 1), to form a calendered film of the dry electrode materials mixture; and
- A step 3) of laminating said calendered film of the dry electrode materials mixture resulting from step 2) on at least one surface of a current collector to coat said current collector on at least one of its surfaces, with said calendered film of the dry electrode materials.

In the context of the present invention, the word: "paste" refers to a highly cohesive, non flowable elastic solid, contrary to a powder and the expression: "solvent free agglomerates of a dry paste of a fibrilized mixture of electrode materials" used in step 1) of the method as defined above, indicates that said agglomerates of the dry paste of a fibrilized mixture of electrode materials are solvent free, and were prepared by a solvent free process.

In the context of the present invention, said agglomerates of the dry paste of the fibrilized mixture of electrode materials is generally provided at step 1) having a temperature greater or equal to 50°C and less or equal to 100°C. Said agglomerates of a dry paste of a fibrilized mixture of electrode materials are then used in step 2) without being cooled by any cooling system.

According to a particular embodiment of the method as defined above, said agglomerates of the dry paste of the fibrilized mixture of electrode materials is produced by a dry one-pot method comprising the following steps:
- A step 1a) of providing the following powders:
   - A powder of at least one electrode active material,
   - Optionally, a powder of at least one conductive material,
   - A powder of at least one binder, and
   - Optionally a powder of at least one co-binder;
- A step 1b) of dry mixing together all the powders provided at step 1a), to form a primary mixture of all these powders;
- A step 1c) of dry mixing said primary mixture resulting from step 1b), for a sufficient time to reach a fibrilization temperature ranging between 50°C and 100°C, for the resulting mixture to be converted to the expected agglomerates of the dry paste of the fibrilized mixture of electrode materials, having a size in the range of 10 micrometres (µm) to 2 centimetres (cm).

In a particular embodiment of the method as defined above, the term: "one pot", must be understood as meaning: "in a single container", in which all the steps of the above so-called one pot method are implemented. The term: "dry one-pot method", means that said one-pot method is implemented in a solvent free manner.

In the definition of step 1b) of the method as defined above, the following sentence: "A step 1b) of dry mixing together all the powders provided at step 1a), to form a primary mixture of all these powders", means that all the powdery materials which are needed to implement the method are first mixed together.

In a more particular embodiment of the method as defined above, the steps 1b) and 1c) of the dry one-pot method are implemented in one unique rotative tumbler blender equipped with rotative high shear blades. Such a blender is commercially available; an example of such a blender is the IBC blender commercialized by Matcon.

The blender can be coupled to a computer operating with an appropriate software to manage the smooth running of steps 1b) and 1c) of the above method.

In the context of said particular embodiment, the speed of rotation of the blender bowl, is around 5 to 20 rounds per minute (rpm), preferably 5 to 15 rpm, the speed of rotation of the shearing blades is around 1,000 to 3,000 rpm, and said speeds preferably remain constant during steps 1b) and 1c) of said method.

In the above defined method, the duration of step 1b) is around 10 minutes during which the temperature inside the blender bowl remains almost constant; this allows the formation of an ideal dispersion of all the powders provided at step 1a), in said primary mixture.

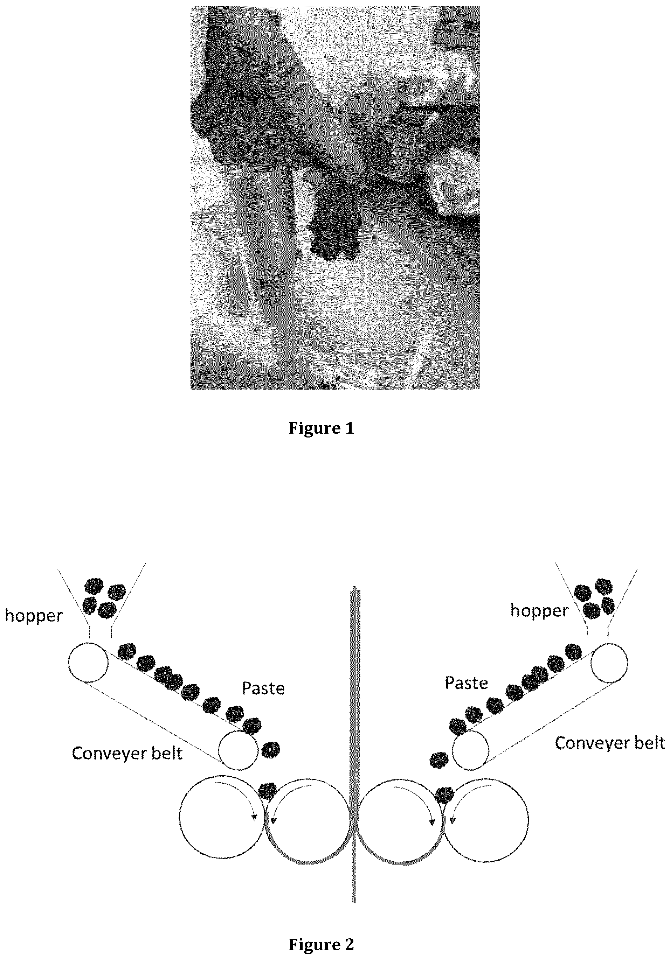

After around 10 minutes the temperature inside the blender bowl progressively increases to reach between 50°C to 100°C and induce the fibrillization of said primary mixture resulting from step 1b). The duration of step 1c) is around 15 to 30 minutes, depending on the materials which are used. The progressive increase of the temperature inside the blender bowl during step 1c) of the above method is due only to the mechanical frictions occurring during the blending process and is not generated by any additional heating device. The photographs of Figure 1 are those of the dry paste of a fibrilized mixture of electrode materials obtained at the end of step 1c) of the method as defined above.

In the dry one-pot method of preparation of the agglomerates of the dry paste of the fibrilized mixture of electrode materials provided at step 1) of the method, as defined above, the mass ratio between the conductive material and the electrode active material is generally greater than 0 and less or equal to 1/9, such as less or equal to 1/19, and more particularly less or equal to 1/39. The primary mixture resulting from step 1b) generally contains from 0.5 wt. % to 10 wt.%, preferably from 1.5 wt.% to 5 wt.% of said powder of the at least one binder or in combination with said optional co-binder.

According to another particular embodiment step 2) of the method as defined above, comprises the following successive steps:
- A step 2a) of transferring, without cooling, said agglomerates of the dry paste of the fibrilized mixture of electrode materials provided at step 1), from said rotative tumbler-blender, to a buffer tank,
- A step 2b) of transferring, without cooling, said agglomerates of the dry paste of the fibrilized mixture of electrode materials from said buffer tank to a feeding hopper, using a pneumatic aspiration system, more particularly a gravimetric hopper;
- A step 2c) of transferring said agglomerates of the dry paste of the fibrilized mixture of electrode materials from said feeding hopper to a multiple rolls calendering system using a conveyor belt equipped with a vibrational system; and
- A step 2d) of calendering at a temperature ranging between 80°C to 120°C, said agglomerates of the dry paste of the fibrilized mixture of electrode materials using said multiple rolls calendering system, to form the expected calendered film of the dry electrode materials mixture.

In the particular embodiment of the method as defined above, said conveyor belt, used at step 2c) allows adjustment of the required parameters such as the feeding speed of said dry past of fibrilized electrode materials mixture resulting from step 2b), to said rolls calendering system.

According to another particular embodiment of the method as defined above, said calendered film of the dry electrode materials mixture resulting from step 2) or step 2d), has a thickness from 1 mm to 5 mm and more particularly from 1 mm to 3 mm.

According to another particular embodiment, the lamination step 3) is implemented on both faces of a current collector sheet, such as an aluminium foil or copper foil. Figure 2 is an illustrative representation of an installation for implementing the method as defined above.

When a dry cathode materials mixture is used in said method for manufacturing a dry electrode for batteries as defined above, the at least one cathode active material is mainly chosen from a group consisting of Li[Ni_{(1-x-y-z)}CoₓM¹_{y}M²_{z}]O₂ compounds, wherein M¹ and M² independently represents Al, Mg or Mn, the sum being strictly less than 1 and strictly greater than 0.5 [0.5<(1-x-y-z)<1]; examples of such compounds are Li[Ni_{0.6}Co_{0.2}Mn_{0.2}]O₂ (NMC 622), Li[Ni_{0.6}Co_{00.1}Mn_{0.3}]O₂ (NMC 631), Li[Ni_{0.8}Co_{0.1}Mn_{0.1}]O₂ (NMC 811), Li[Ni_{0.9}Co_{0.05}Mn_{0.05}]O₂ (NMC Ni90), Li[Ni_{0.82}Co_{0.11}Mn_{0.07}]O₂ (NMC Ni82), or Li[Ni_{0.81}Co_{0.15}Al_{0.04}]O₂. Said cathode active material is mixed with at least one conductive material, mainly chosen from a group consisting of graphite, carbon black, ketjen black, carbon nanotubes (CNTs), or a combination of two or more of these; the at least one binder is mainly chosen from the group consisting of fluorinated polymers, polyethylene or cellulose fibbers; examples of binder for cathodes are PFTE or PVDF binders commercialized as Kynar^{™} binders such as Kynar^{™} HSV 1810.

When a dry anode materials mixture is used in said method for manufacturing a dry electrode for batteries as defined above, the at least one anionic active material is mainly graphite or mixtures thereof such as porous carbon, lithium titanium oxide (LTO), silicon or silicon containing compounds such silicon carbide or silicon oxide; said anode active material is optionally mixed with at least one optional conductive material such as carbon black optionally in combination CNTs; said at least one binder is mainly chosen from the group consisting of fluorinated polymers, Polyethylene or cellulose fibres; examples of binder for anodes are PFTE, the carboxylated styrene butadiene copolymers commercialized as Licity^{™} binders or PVDF binders commercialized as Kynar^{™} binders such as Kynar^{™} HSV 1810.

The hereinabove defined process generates the following advantages:
- A better control of the harmful emission of powder;
- A decrease of the friction of the rolls during the calendering steps, which allows a corelative decrease of the consumed energy during the process;
- A more compact and cheaper system is used for the feeding prior to the calendering step. The two first rolls are not heated and are synchronously driven.

## Claims

1. A method for manufacturing a dry electrode for batteries, said method comprising the following steps:
- A step 1) providing solvent free agglomerates of a dry paste of a fibrilized mixture of electrode materials, said mixture of electrode materials comprising at least one active electrode material, optionally at least one conductive material, at least one binder, and optionally at least one co-binder, said agglomerates having a size in the range of 10 micrometres (µm) to 2 centimetres (cm), and said solvent free agglomerates of the dry paste of a fibrilized mixture of electrode materials having a temperature between 50°C and 100°C;
- A step 2) of continuously calendaring, at a temperature ranging between 80°C to 120°C, said agglomerates of the dry paste of the fibrilized mixture of electrode materials provided at step 1), to form a calendered film of the dry electrode materials mixture; and
- A step 3) of laminating said calendered film of the dry electrode materials mixture resulting from step 2) on at least one surface of a current collector to coat said current collector on at least one of its surfaces, with said calendered film of the dry electrode materials.

2. The method according to claim 1, in which said agglomerates of the dry paste of the fibrilized mixture of electrode materials is produced by a dry one-pot method comprising the following steps:
- A step 1a) of providing the following powders:
- A powder of at least one electrode active material,
- Optionally, a powder of at least one conductive material,
- A powder of at least one binder, and
- Optionally a powder of at least one co-binder;
- A step 1b) of dry mixing together all the powders provided at step 1a), to form a primary mixture of all these powders;
- A step 1c) of dry mixing said primary mixture resulting from step 1b), for a sufficient time, to reach a fibrilization temperature ranging between 50°C and 100°C, for the resulting mixture to be converted to the expected agglomerates of the dry paste of the fibrilized mixture of electrode materials having a size in the range of 10 micrometres (µm) to 2 centimetres (cm).

3. The method according to claim 2, in which, the steps 1b) and 1c) are implemented in one unique rotative tumbler blender equipped with rotative high shear blades.

4. The method according to claim 3, in which the speed of rotation of the blender bowl, is around 5 to 20 rounds per minute (rpm), preferably 5 to 15 rpm, the speed of rotation of the shearing blades is around 1,000 to 3,000 rpm, and said speeds preferably remain constant during the steps 1b and 1c) of said method.

5. The method according to anyone of claims 3 or 4, in which the temperature inside the blender bowl progressively increases during step 1c) such as to reach between 50°C to 100°C and to induce the fibrillization of said primary mixture resulting from step 1b).

6. A method according to anyone of claims 1 to 5 in which step 2) comprises the following successive steps:
- A step 2a) of transferring, without cooling, said agglomerates of the dry paste of a fibrilized mixture of electrode materials provided at step 1), from said rotative tumbler-blender, to a buffer tank,
- A step 2b) of transferring, without cooling, said agglomerates of the dry paste of the fibrilized mixture of electrode materials from said buffer tank to a feeding hopper, using a pneumatic aspiration system;
- A step 2c) of transferring said agglomerates of the dry paste of the fibrilized mixture of electrode materials from said feeding hopper to a multiple rolls calendering system using a conveyor belt equipped with a vibrational system; and
- A step 2d) of calendering at a temperature ranging between 80°C to 120°C said agglomerates of the dry paste of the fibrilized mixture of electrode materials using said multiple rolls calendering system, to form the expected calendered film of the dry electrode materials mixture.

7. The method according to anyone of claims 1 to 6, in which said film of said dry electrode materials mixture resulting from step 2) or step 2d), has a thickness from 1 mm to 5 mm and more particularly from 1 mm to 3 mm.

8. The method according to anyone of claims 1 to 7, in which said lamination step 3) is implemented on both faces of a current collector sheet.
